# EUROPÄISCHE PATENTSCHRIFT

(11) **EP 2 842 852 B1**
(45) Veröffentlichungstag und Bekanntmachung des Hinweises auf die Patenterteilung: **13.06.2018**
(21) Anmeldenummer: 14002967.9
(22) Anmeldetag: 27.08.2014
(51) Int. Cl.: B62K 19/30

(54) **Einsatz zum Sichern von Kabeln, Seilzügen und Leitungen an Fahrradrahmen**
Insert for securing cables, bowden-wires or hoses at bicycle frames
Garniture pour attacher des cábles ou conduits aux cadres de bicyclette

(30) Priorität: 28.08.2013 DE 102013014338
(43) Veröffentlichungstag der Anmeldung: 04.03.2015
(73) Patentinhaber: Winora-Staiger GmbH, 97526 Sennfeld (DE)
(72) Erfinder: Beutner, Ingo, 97737 Gemünden (DE)
(74) Vertreter: Weigel, Matthias

(56) Entgegenhaltungen:
- EP-A2- 2 159 140
- EP-A2- 2 546 132
- CN-Y- 2 707 599
- US-A- 4 102 219
- US-A- 4 517 408
- US-A- 4 915 404
- US-A- 5 433 465
- US-A- 5 478 100
- US-A- 5 836 212
- US-A1- 2012 011 957
- US-A1- 2012 175 471

## Beschreibung

Die Erfindung betrifft einen in einer an einem Fahrradrahmen vorgesehenen Aufnahmeöffnung lösbar befestigbaren Einsatz zum Sichern von durch die Aufnahmeöffnung geführter Kabel, Seilzüge oder Leitungen, wobei der Einsatz eine Durchgangsöffnung für das Kabel oder die Leitung aufweist.

Schon seit langem werden Kabel, wie Bremskabel, Hydraulikleitungen, Seilzüge, wie Bowdenzüge und Schaltzüge, oder Leitungen, wie elektrische Leitungen für die Beleuchtungsanlage oder neuerdings für die Betätigung elektrischer Antriebe, zumindest abschnittsweise im Fahrradrahmen geführt.

Hierzu werden am Fahrradrahmen entsprechende Öffnungen vorgesehen, durch die die Kabel, Seilzüge und Leitungen in eines der Rohre des Fahrradrahmens eingeführt und an geeigneter Stelle wieder aus dem Fahrradrahmen herausgeführt werden.

Um die Kabel, Seilzüge und Leitungen einerseits in den Öffnungen zu sichern und andererseits eine Beschädigung der Kabel, Seilzüge und Leitungen an den Öffnungskanten zu vermeiden, ist es üblich, auf das Kabel, den Seilzug oder die Leitung einen Einsatz aus einem elastischen Material, wie Gummi, aufzufädeln, der in der Öffnung geklemmt wird. Üblicherweise Weise ist der normalerweise hohlzylinderförmige Einsatz an seiner Umfangsfläche mit einer umlaufenden Aufnahmenut versehen, mit der der Einsatz an der Innenumfangsfläche der runden Öffnung dichtend anliegt, während die beiderseits der Aufnahmenut vorgesehenen umlaufenden Wulste an der Außen- und Innenoberfläche des Einsatzes im Bereich der Öffnung dichtend anliegen.

Aus der US 4 915 404 A, auf der der Oberbegriff von Anspruch 1 basiert, und der US 5 433 465 sind jeweils Einsätze für Kabel bekannt, die gleichzeitig auch als Widerlage für die Kabelenden dienen.

Nachteilig an dieser bekannten Lösung ist, dass die Einsätze üblicherweise verhältnismäßig klein dimensioniert sind, um sicher in den Öffnungen gehalten zu werden. In Folge sind auch die Öffnungen entsprechend klein dimensioniert, was wiederum sowohl das Einfädeln der Kabel, Seilzüge und Leitungen als insbesondere auch das Ausfädeln durch die Öffnung aus dem Fahrradrahmen sehr erschwert. Ferner ist es häufig notwendig, an den Enden der Kabel, Seilzüge und Leitungen vorgesehene Funktionselemente, wie Schraubverbindungen, Zugnippel, Stecker, etc., vor dem Ein- und Ausfädeln am einen Ende des Kabels, des Seilzuges oder der Leitung zu entfernen und gegebenenfalls nach dem Ein- und Ausfädeln wieder ordnungsgemäß an diesen zu befestigen.

Der vorliegenden Erfindung liegt die Aufgabe zugrunde, einen Einsatz der eingangsgenannten Art so weiterzubilden, dass das Einfädeln und Ausfädeln von Kabeln, Seilzügen und Leitungen verglichen mit dem Stand der Technik vereinfacht ist.

Erfindungsgemäß wird diese Aufgabe durch einen Einsatz mit den Merkmalen gemäß Anspruch 1 gelöst.

Erfindungsgemäß dient der sonst im Stand der Technik lediglich als Auszugssicherung dienende Einsatz zusätzlich als abdichtendes Verschlusselement für eine entsprechend groß dimensionierbare Aufnahmeöffnung am Fahrradrahmen.

Bisher war es im Stand der Technik üblich, die Aufnahmeöffnung am Fahrradrahmen möglichst klein zu dimensionieren, so dass nur das Kabel, der Seilzug bzw. die Leitung gemeinsam mit dem Einsatz unter Vorspannung in der Aufnahmeöffnung gehalten ist.

Erfindungsgemäß wird ein völlig anderer Ansatz gewählt. So dient der Einsatz nicht nur als Auszugssicherung, sondern gleichzeitig als Abdeckung für eine möglichst groß dimensionierte Aufnahmeöffnung, deren Größe nur mehr durch die Steifigkeit des Rohres oder Rahmenabschnittes des Fahrradrahmens beschränkt ist, an der die Aufnahmeöffnung vorgesehen ist.

Hierzu wird erfindungsgemäß vorgeschlagen, den Einsatz mit einem Widerlager zu versehen, mit dem sich der Einsatz an der Innenseite des Fahrradrahmens nach der Montage in die Aufnahmeöffnung abstützt. Die notwendige Sicherung des Einsatzes in der Aufnahmeöffnung erfolgt durch ein von dem Widerlager entfernt vorgesehenes Befestigungselement. Der Einsatz ist ferner an dem Übergang seiner Umlaufkontur in die dem Fahrradrahmen zuzuwendende Unterseite des Einsatzes mit einem flächigen Randbereich versehen, der als Dichtungsfläche dient. Sobald der Einsatz mit Hilfe des Befestigungselementes am Fahrradrahmen ordnungsgemäß gesichert wird, kommt die Randbereich flächig im unmittelbaren Umfangsbereich der Aufnahmeöffnung am Fahrradrahmen zur Anlage und dichtet den Spalt zwischen dem Einsatz und dem Fahrradrahmen ab.

Der Einsatz ist dabei so dimensioniert, dass die Aufnahmeöffnung nicht nur vollständig verschlossen ist, sondern der Umfangsbereich um die Aufnahmeöffnung mit Hilfe des Einsatzes möglichst dichtend verschlossen ist.

Die Vorteile, die sich durch Verwendung des erfindungsgemäßen Einsatzes sind vielfältig. So kann die Aufnahmeöffnung so groß wie nötig am Fahrradrahmen ausgeführt sein, um das Ein- und Ausführen der Kabel, Seilzüge und Leitungen verglichen mit dem Stand der Technik zu vereinfachen. Ferner können je nach Anwendungsfall unterschiedliche Einsätze verwendet werden, so Einsätze für Kabel, für Seilzüge oder für Leitungen. Damit erreicht man insbesondere in der Herstellung verschiedener Fahrräder eine hohe Flexibilität. So kann für unterschiedliche Fahrräder derselbe Grundrahmen verwendet werden. Um unterschiedliche Kabel, Seilzüge oder Leitungen zu verlegen, muss dann nur der entsprechend vorbereitete Einsatz an der jeweiligen Aufnahmeöffnung werden. Soll beispielsweise eine Hydraulikleitung für eine hydraulische Bremseinrichtungen verwendet werden, wird ein anderer Einsatz verwendet als beispielsweise bei der Montage eines Bowdenzuges.

Dabei ist der Einsatz, um die Montage des Einsatzes am Kabel, am Seilzug bzw. an der Leitung zu erleichtern, zumindest im Bereich der Durchgangsöffnung derart geteilt ausgebildet, dass vor dem Einbau des Einsatzes in den Fahrradrahmen die Durchgangsöffnung zum Einlegen des Kabels bzw. des Seilzuges bzw. der Leitung in die Durchgangsöffnung über ihre gesamte axiale Länge zu öffnen ist und bei eingebautem Einsatz die Durchgangsöffnung soweit geschlossen ist, dass das Kabel bzw. die Leitung zumindest abschnittsweise gegen Herausziehen gesichert ist.

Durch die geteilte Ausbildung des Einsatzes ist es möglich, zunächst das Kabel, den Seilzug bzw. die Leitung durch die am Fahrradrahmen ausgebildeten Aufnahmeöffnungen einzuführen bzw. herauszuziehen und erst anschließend den Einsatz definiert an der gewünschten Stellen am Kabel, am Seilzug bzw. an der Leitung vorzusehen und zu sichern. Auch ist es denkbar, einen Einsatz mit einer Durchgangsöffnung mit einheitlichem Öffnungsquerschnitt zu verwenden und auf das Kabel, den Seilzug bzw. die Leitung eine Manschette oder ein Zwischenhülse, vorzugsweise geschlitzt, aufzuziehen, mit der das Kabel, der Seilzug bzw. die Leitung unter leichter Vorspannung in der Durchgangsöffnung nach dem Zusammenfügen des Einsatzes gehalten und gesichert ist.

Weitere Vorteile der Erfindung ergeben sich aus der nachfolgenden Beschreibung, den Unteransprüchen und den Zeichnungen.

Um das Kabel, den Seilzug oder die Leitung insbesondere im Bereich der Durchgangsöffnung definiert zu führen und vor äußeren Einflüssen zu schützen, wird bei einer besonders bevorzugten Ausführungsform des erfindungsgemäßen Einsatzes vorgeschlagen, am Einsatz eine in die Aufnahmeöffnung ragende Ausformung auszubilden, in welcher die Durchgangsöffnung für das Kabel bzw. den Seilzug bzw. die Leitung vorgesehen ist. Die Ausformung kann beispielsweise in Form einer nach innen ragenden Rampe oder auch in Form eines nach innen ragenden Hohlzylinders ausgebildet sein. An der Ausformung ist dann die mindestens eine Durchgangsöffnung für das Kabel, den Seilzug bzw. die Leitung vorgesehen. Ferner ist es auch denkbar, den Bereich unmittelbar um die Durchgangsöffnung beispielsweise durch Versteifungsrippen, Materialverstärkungen und vergleichbares zu verstärken.

Das Widerlager ist bei einer besonders bevorzugten Ausführungsform dieses Einsatzes als ein an der Ausformung ausgebildeter Vorsprung ausgebildet, mit dem der Einsatz an der Innenseite des Fahrradrahmens flächig anliegt, während die Ausformung in den flächigen Randbereich des Einsatzes übergeht. Hierdurch wird insbesondere das Montieren des Einsatzes erleichtert, da das Widerlager den Einsatz beim Montieren positioniert und dabei die Ausformung bereits in die richtige Position zur Montage ausrichtet.

Bei einer weiteren besonders bevorzugten Ausführungsform des Einsatzes mit Ausformung dient die Ausformung gleichzeitig als Stützfläche für das Ende einer Kabel- oder Seilzugummantelung. So sind Kabel, wie Bremskabel, oder Seilzüge, wie Bowdenzüge, häufig mit Ummantelungen versehen, welche zur Erzeugung einer Relativbewegung zwischen Ummantelung und Kabel bzw. Seil in einer definierten Position gehalten werden müssen, während das Kabel oder das Seil durch ein geeignetes Stellglied, wie einem Brems- oder eine Schalthebel, in der Ummantelung hin und her bewegt wird. Durch Ausbildung einer Stützfläche an der Ausformung ist so eine definierte Abstützung der Ummantelung gewährleistet. Auch kann ein zusätzliches Verbindungselement in die Durchgangsöffnung eingesetzt sein, an dem die Ummantelung des Kabels oder des Seilzuges beispielsweise durch Verschrauben oder Verrasten gesichert ist.

Die geteilte Ausführung des Einsatzes kann gleichfalls mit einer Ausformung versehen sein, in der die Durchgangsöffnung ausgebildet ist, wobei die Ausformung auch bei dieser Variante bei eingebautem Einsatz in die Aufnahmeöffnung ragt.

Bei dieser Ausführungsform ist die Ausformung zumindest im Bereich der Durchgangsöffnung geteilt ausgebildet und weist zwei getrennt voneinander ausgebildeten Abschnitte, die vor dem Einbau des Einsatzes in die Aufnahmeöffnung soweit voneinander wegzubewegen sind, dass die Durchgangsöffnung für das Einlegen des Kabels bzw. des Seilzuges bzw. der Leitung ausreichend weit geöffnet ist. Nach dem Einbau des Einsatzes in die Aufnahmeöffnung liegen die Abschnitte der Ausformung wiederum zumindest bereichsweise derart aneinander an, dass die Durchgangsöffnung soweit geschlossen ist, dass das Kabel bzw. des Seilzuges bzw. die Leitung, gegebenenfalls unter zusätzlichem Vorsehen einer Manschette oder Zwischenhülse, gegen Herausziehen gesichert ist.

Vorzugsweise ist der Einsatz mit geteilt ausgebildeter Durchgangsöffnung zweiteilig ausgebildet, wobei die Teilungsebene durch die Durchgangsöffnung und die gegebenenfalls vorgesehene Ausformung verläuft.

Bei der zweiteiligen Ausführung des Einsatzes ist bei einer besonders bevorzugten Ausführungsform an jedem Abschnitt der Ausformung ein Verbindungselement ausgebildet. Die beiden Verbindungselemente stehen dann miteinander in Eingriff, wenn der zweiteilige Einsatz als Einheit mit dazwischen angeordnetem Kabel, Seilzug bzw. Kabel zusammengesetzt bzw. zusammengefügt ist. Die Verbindungselemente können beispielsweise in Form ineinandergreifender Haken oder ineinandergreifender Scharniere ausgebildet sein. Auch eine Rastverbindung mit Rastöffnungen und darein zu verrastenden Rasthaken ist denkbar.

Zum Sichern des Einsatzes ist bei einer besonders bevorzugten Ausführungsform an dem Einsatz eine Befestigungsöffnung vorgesehen ist, durch die das Befestigungselement, beispielsweise eine Schraube ,ein Rastelement, oder dergleichen, mit dem der Einsatz am Fahrradrahmen lösbar zu befestigen ist, geführt ist. Die Befestigungsöffnung ist hierbei bevorzugt an der dem Widerlager entgegengesetzten Seite am Einsatz ausgebildet.

Ist der Einsatz zweiteilig ausgebildet, ist bei einer besonders bevorzugten Ausführungsform an jedem Einsatzteil des geteilten Einsatzes jeweils eine Öse mit einer Öffnung ausgebildet. Die Ösen sind dabei so zueinander angeordnet, dass, wenn die Einsatzhälften des zweiteiligen Einsatzes als Einheit zusammengesetzt sind, die beiden Ösen derart aufeinander zu liegen kommen, dass die Öffnungen miteinander fluchten und die Befestigungsöffnung bilden. Bei Verwendung einer Schraube als Befestigungselement sowie dem Vorsehen der zuvor beschrieben Verbindungselemente ergibt sich so eine sehr präzise und haltbare Verbindung zwischen den beiden Teilen des Einsatzes.

Auch ist es denkbar, im Bereich der Befestigungsöffnung zusätzliche Rastnasen oder vergleichbare Sicherungselemente vorzusehen, die ein Öffnen der Befestigungsöffnung insbesondere unmittelbar vor der Montage wirksam verhindern.

Der Einsatz kann, insbesondere, wenn der Fahrradrahmen aus einem faserverstärkten Werkstoff, beispielsweise aus einem Kohlenstofffaser verstärkten Kunststoff, gefertigt ist, unmittelbar in die Aufnahmeöffnung eingesetzt und am Fahrradrahmen gesichert sein. Ist der Fahrradrahmen dagegen aus Metallrohren zusammengesetzt, beispielsweise aus Aluminiumrohren, wird vorgeschlagen, die Aufnahmeöffnung an einem Rahmenelement, vorzugsweise aus Metall, vorzusehen, das am Fahrradrahmen befestigt ist.

Der Einsatz ist vorzugsweise aus einem spritzfähigen Kunststoffmaterial gefertigt. Auch liegt es im Rahmen der Erfindung, aus Metall gefertigte Elemente, wie Gewindebuchsen, Hülsen, Rastnasen, etc. in den aus Kunststoff gefertigten Einsatz einzuformen, so dass diese einen integralen Bestandteil mit dem Einsatz bilden.

Nachfolgend wird die Erfindung anhand zweier Ausführungsbeispiele unter Bezugnahme auf die Zeichnung näher erläutert. Darin zeigt
- Fig. 1: eine perspektivische Darstellung eines ersten Ausführungsbeispiels eines nicht erfindungsgemäßen Einsatzes,
- Fig. 2: eine teilweise geschnittene Seitenansicht des Einsatzes aus Fig. 1 in am Fahrradrahmen montiertem Zustand,
- Fig. 3: eine Draufsicht des Einsatzes aus Fig. 1 in montiertem Zustand,
- Fig. 4: eine Unteransicht des Einsatzes aus Fig. 1,
- Fig. 5: eine perspektivische Explosions-Darstellung eines erfindungsgemäßen zweiten Ausführungsbeispiels eines Einsatzes, sowie
- Fig. 6: eine Unteransicht des Einsatzes aus Fig. 5 im zusammengesetzten Zustand.

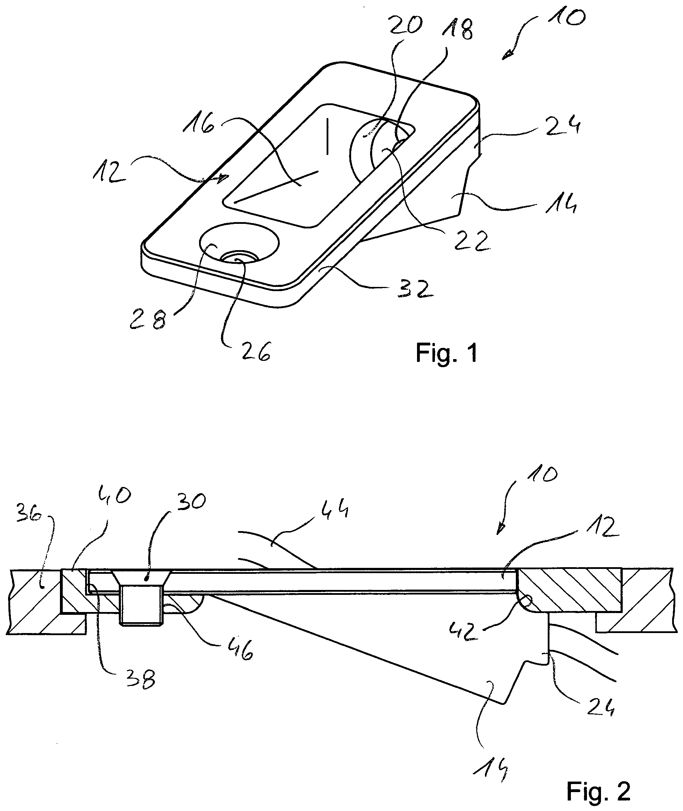

In Fig. 1 ist in perspektivischer Darstellung ein erstes Ausführungsbeispiel eines nicht erfindungsgemäßen Einsatzes 10 gezeigt. Der Einsatz 10 hat eine Grundplatte 12, die in ihrer Mitte mit einer nach unten von Unterseite abstehenden Ausformung 14 versehen ist.

Wie in der in Fig. 2 gezeigten Seitenansicht des Einsatzes 10 dargestellt ist, hat die Ausformung 14 eine von der Unterseite der Grundplatte 12 ausgehende Rampenform, während die Oberseite der Grundplatte 12 (vgl. Fig. 1) nach innen zu einer rampenförmigen Ausnehmung 16 ausgeformt ist.

Wie Fig. 1 weiter zeigt, ist an der Stirnseite der Ausnehmung 16 eine Durchgangsöffnung 18 ausgebildet, die sich durch die Stirnseite auf die Rückseite der Ausformung 14 erstreckt. Des Weiteren ist an der Durchgangsöffnung 18 ein Abschnitt 20 größeren Durchmessers ausgebildet, der einen Absatz 22 mit der Durchgangsöffnung 18 bildet.

Wie Fig. 2 zeigt, erstreckt sich die Durchgangsöffnung 18 durch einen Vorsprung, der als Materialverstärkung 24 auf der Rückseite der Ausformung 14 ausgeformt ist und sich über die gesamte Breite der Rückseite der Ausformung 14 erstreckt. Wie später noch erläutert wird, dient diese Materialverstärkung 24 als Widerlager für den Einsatz 10.

An der der Stirnseite der Ausnehmung 16 entgegengesetzten Seite ist an der Grundplatte 12 eine Befestigungsöffnung 26 mittig vorgesehen, welche mit einer kegelförmigen Ansenkung 28 für eine Senkschraube 30 (vgl. Fig. 2) ausgestattet ist.

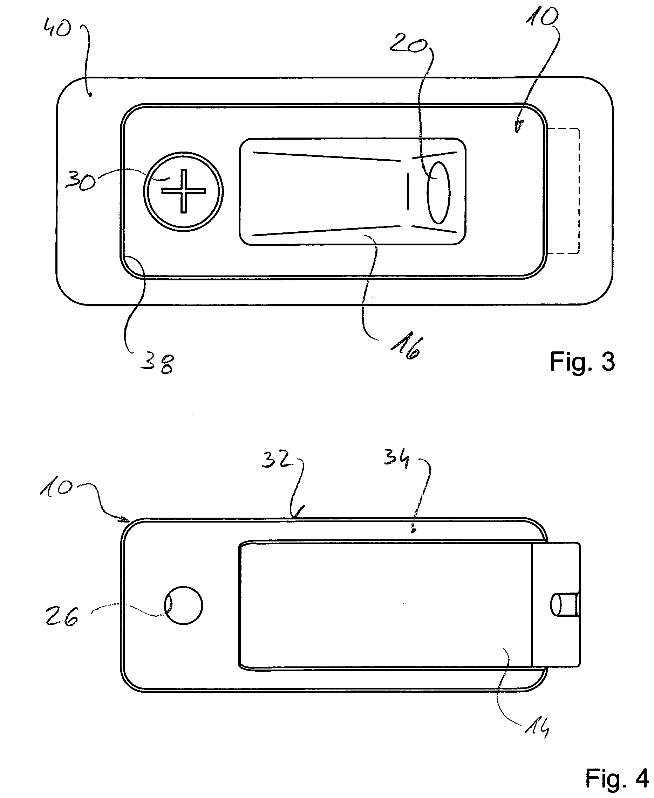

Wie Fig. 4 zeigt, erstreckt sich die Ausformung 14 quer zur Breite der Grundplatte 12 gesehen lediglich über etwa 3/4 der Gesamtbreite und ist mittig zwischen den Seitenkanten der Grundplatte 12 ausgebildet. Der unmittelbar in die Umlaufkontur 32 der Grundplatte 12 übergehende, verbleibende Randbereich 34 bildet, wie später noch erläutert wird, eine Dichtfläche.

In Fig. 2 ist nun der Einsatz 10 in seiner montierten Position gezeigt. Der Einsatz 10 ist hierbei an einem aus faserverstärktem Kunststoff gefertigten Fahrradrahmen 36 befestigt. Um eine optimale Befestigung zu gewährleisten, ist der Fahrradrahmen 36 im Bereich einer Aufnahmeöffnung 38, an der der Einsatz 10 befestigt werden soll, mit einem Rahmenelement 40 versehen, welches in bekannter Weise fest mit dem Fahrradrahmen 36 verbunden ist.

Zum Befestigen des Einsatzes 10 wird dieser mit seiner als Widerlager dienenden Materialverstärkung 24 in das Rahmenelement 40 eingefädelt und soweit eingeführt, bis der Übergang 42 der Materialverstärkung 24 in die Umlaufkontur 32 der Grundplatte 12 an der Umlaufkante der im Rahmenelement 40 ausgebildeten Aufnahmeöffnung 38 anliegt, während die Materialverstärkung 24 mit ihrer Oberseite an der Unterseite des Rahmenelementes 40 anliegt. Anschließend wird der Einsatz 10 mit Hilfe der Senkschraube 30 an einem in dem Rahmenelement 40 vorgesehenen Gewinde 44 verschraubt. Durch das Verschrauben wird der Einsatz 10 gegen die Wirkung der als Widerlager dienenden Materialverstärkung 24 vorgespannt, wobei der Einsatz 10 mit seinem Randbereich 34 gleichfalls unter Vorspannung auf die Oberseite des Rahmenelementes 40 dichtend anliegt, wie in Fig. 3 gezeigt ist.

Soll nun beispielsweise ein Kabel 46 im Fahrradrahmen 36 verlegt werden, wird zunächst das Kabel 46 durch die Aufnahmeöffnung 38 in den Fahrradrahmen 36 eingeführt. Anschließend oder auch unmittelbar vor Einführen des Kabels 46 in die Aufnahmeöffnung 38 wird das Kabel 46 durch die Durchgangsöffnung 18 des Einsatzes 10 gezogen. Der Außendurchmesser der Ummantelung des Kabels 46 ist dabei geringfügig größer als der Innendurchmesser der Durchgangsöffnung 18, so dass das Kabel 46 abgedichtet in der Durchgangsöffnung 18 gesichert ist. Anschließend wird der Einsatz 10 in der vorbeschriebenen Weise am Rahmenelement 40 befestigt.

Der Einsatz 10 eignet sich jedoch auch als Widerlager für die Seilzugummantelung eines Seilzuges. Hierbei wird die Zugseele des Seilzuges durch die Durchgangsöffnung 18 gezogen, während sich der Seilzug mit der Stirnseite seiner Seilzugummantelung am Absatz 22 der Durchgangsöffnung 18 abstützt. Die Zugseele wird somit ohne Ummantelung durch den Fahrradrahmen 36 geführt und kann unter Verwendung eines weiteren erfindungsgemäßen Einsatzes 10 an einer anderen Stelle aus dem Fahrradrahmen 36 wieder herausgeführt werden, wobei auch hier gegebenenfalls eine Seilzugummantelung sich am Einsatz 10 in der zuvor beschriebenen Weise abstützt.

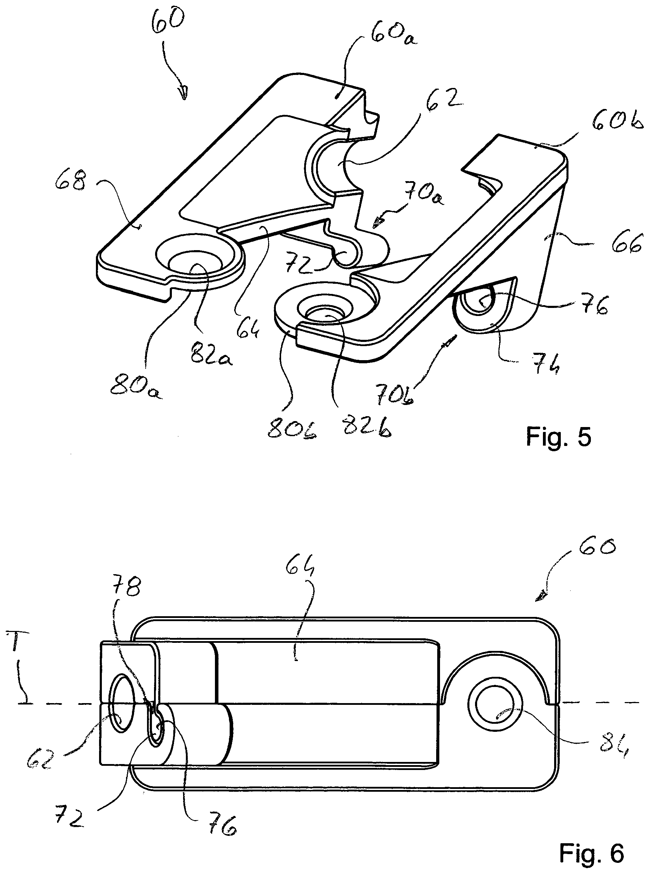

In den Fig. 5 und 6 ist ein erfindungsgemäßes zweites Ausführungsbeispiel eines Einsatzes 60 dargestellt. Der wesentliche Aufbau des Einsatzes 60 entspricht dem zuvor beschriebenen Aufbau des Einsatzes 10. Allerdings ist der Einsatz 60 zweiteilig ausgeführt, wie insbesondere Fig. 5 zeigt, in der eine perspektivische Explosionsdarstellung des Einsatzes 60 gezeigt ist.

Wie in Fig. 5 gezeigt, ist der Einsatz 60 im Bereich der Durchgangsöffnung 62 in Längsrichtung der Durchgangsöffnung 62 geteilt, so dass eine Teilungsebene T gebildet ist, die auch die Ausformung 64 und die Materialverstärkung 66 mittig teilt.

Um die sich hierdurch ergebenden Einsatzhälften 60a und 60b lösbar miteinander zu verbinden, ist an der der Grundplatte 68 abgewandten Unterseite der Materialverstärkung 66 jeder Einsatzhälfte 60a und 60b jeweils ein Verbindungselement 70a und 70b ausgebildet. Das Verbindungselement 70a der in Fig. 5 links dargestellten Einsatzhälfte 60a ist in Form eines zylinderförmigen Zapfens 72 ausgebildet, dessen Symmetrieachse parallel zur Längsachse der Durchgangsöffnung 62 verläuft und seitlich versetzt aus der Materialverstärkung 66 hervorsteht.

Das Verbindungselement 70b der Einsatzhälfte 60b ist als hakenförmige Verlängerung 74 ausgebildet, die eine im Querschnitt runde hohlzylinderförmige Aufnahme 76 bildet, welche an ihrer der anderen Einsatzhälfte 60a zuzuwendenden Seite mit einem Schlitz 78 versehen ist. Um die beiden Einsatzhälften 60a und 60b miteinander zu verbinden, muss lediglich der Zapfen 72 in die Aufnahme 76 eingeführt oder eingerastet werden, wie beispielsweise Fig. 6 zeigt.

Um ein unbeabsichtigtes Öffnen des Einsatzes 60 zu vermeiden, ist an jeder Einsatzhälfte 60a und 60b jeweils eine Öse 80a und 80b ausgebildet. Die beiden Ösen 80a und 80b sind derart an den beiden Einsatzhälften 60a und 60b ausgeformt, dass sie, wenn die Einsatzhälften 60a und 60b als Einheit zusammengesetzt sind, aufeinander zu liegen kommen und dabei die in den Ösen 80a und 80b jeweils vorgesehenen Öffnungen 82a und 82b miteinander fluchten und gemeinsam die Befestigungsöffnung 84 für eine Senkschraube bilden.

Der geteilte Einsatz 60 kommt insbesondere bei Kabeln, Seilzügen und Leitungen zum Einsatz, bei denen ein Hindurchziehen der Kabel, Seilzüge oder Leitungen durch die Durchgangsöffnung 18 des Einsatzes 10 aufgrund vorgesehener Funktionselemente, wie Nippel, Stecker und Ähnliches, nur mit großem Aufwand durch Entfernen und Wiederbefestigen der Funktionselemente möglich wäre. Bei Verwendung des geteilten Einsatzes 60 muss dieser lediglich geöffnet, das Kabel, der Seilzug bzw. die Leitung in die geöffnete Durchgangsöffnung 62 eingelegt, und die Einsatzhälften 60a und 60b des Einsatzes 60 anschließend wieder miteinander verbunden werden.

Der so zusammengesetzte Einsatz 60 mit darin gehaltenem Kabel, Seilzug bzw. darin gehaltener Leitung wird anschließend, wie zuvor unter Bezugnahme auf den Einsatz 10 beschrieben, in entsprechender Weise am Fahrradrahmen montiert.

### Bezugszeichenliste:

- 10: Einsatz
- 12: Grundplatte
- 14: Ausformung
- 16: Ausnehmung
- 18: Durchgangsöffnung
- 20: Abschnitt größeren Durchmessers
- 22: Absatz
- 24: Materialverstärkung
- 26: Befestigungsöffnung
- 28: Senkung
- 30: Senkschraube
- 32: Umlaufkontur
- 34: Randbereich
- 36: Fahrradrahmen
- 38: Aufnahmeöffnung
- 40: Rahmenelement
- 42: Übergang
- 44: Gewinde
- 46: Kabel

- 60: Einsatz
- 60a,b: Einsatzhälften
- 62: Durchgangsöffnung
- T: Teilungsebene
- 64: Ausformung
- 66: Materialverstärkung
- 68: Grundplatte
- 70a,b: Verbindungselemente
- 72: Zapfen
- 74: Verlängerung
- 76: hohlzylinderförmige Aufnahme
- 78: Schlitz
- 80a,b: Öse
- 82a,b: Öffnung
- 84: Befestigungsöffnung

## Patentansprüche

1. In einer an einem Fahrradrahmen (36) vorgesehenen Aufnahmeöffnung (38) lösbar zu befestigender Einsatz (10; 60) zum Sichern von durch die Aufnahmeöffnung (38) geführter Kabel, Seilzüge oder Leitungen (46), wobei der Einsatz (10; 60) eine Durchgangsöffnung (18; 62) für das Kabel, den Seilzug oder die Leitung (46) aufweist,
**dadurch gekennzeichnet,**
**dass** der Einsatz (10; 60) mindestens ein in die Aufnahmeöffnung (38) einzuführendes Widerlager (24; 66) aufweist, mit dem sich der Einsatz (10; 60) in einem in die Aufnahmeöffnung (38) eingesetzten Zustand an der Innenseite des Fahrradrahmens (36) im Bereich der Aufnahmeöffnung (38) abschnittsweise abstützt, und dass der Einsatz (10; 60) durch mindestens ein entfernt vom Widerlager (24; 66) angeordnetes Befestigungselement (30) derart am Fahrradrahmen (36) lösbar befestigbar ist, dass der Einsatz (10; 60) in einem befestigtem Zustand in der Aufnahmeöffnung (38) des Fahrradrahmens durch das Zusammenwirken des Befestigungselementes (30) mit dem Widerlager (24; 66) zumindest abschnittsweise in dem in die Umlaufkontur (32) des Einsatzes (10; 60) übergehenden Randbereich (34) seiner dem Fahrradrahmen (36) zuzuwenden Unterseite unter Vorspannung am Fahrradrahmen (36) dichtend anliegt, wobei der Einsatz (60) zumindest im Bereich der Durchgangsöffnung (62) derart geteilt ausgebildet ist, dass vor dem Einbau des Einsatzes (60) in den Fahrradrahmen die Durchgangsöffnung (62) zum Einlegen des Kabels bzw. des Seilzuges bzw. der Leitung in die Durchgangsöffnung (62) über ihre gesamte axiale Länge zu öffnen ist und bei eingebautem Einsatz (60) die Durchgangsöffnung (62) soweit geschlossen ist, dass das Kabel bzw. die Leitung zumindest abschnittsweise gegen Herausziehen gesichert ist.

2. Einsatz nach Anspruch 1, **dadurch gekennzeichnet, dass** am Einsatz (10; 60) eine in die Aufnahmeöffnung (38) ragende Ausformung (16; 64) ausgebildet ist, in welcher die Durchgangsöffnung (18; 62) für das Kabel bzw. den Seilzug bzw. die Leitung (46) vorgesehen ist.

3. Einsatz nach Anspruch 2, **dadurch gekennzeichnet, dass** das Widerlager ein an der Ausformung (16) ausgebildeter Vorsprung (24) ist, mit dem der eingebaute Einsatz (10; 60) an der Innenseite des Fahrradrahmens (36) flächig anliegt, während die Ausformung (16; 64) in den flächigen Randbereich (34) des Einsatzes (10; 60) übergeht.

4. Einsatz nach einem der Ansprüche 2 bis 3, **dadurch gekennzeichnet, dass** die Ausformung (16) als Stützfläche für das Ende einer Kabel- oder Seilzugummantelung dient.

5. Einsatz nach einem der Ansprüche 1 bis 4, **dadurch gekennzeichnet, dass** die Durchgangsöffnung (62) in einer am Einsatz (60) ausgebildeten Ausformung (64) vorgesehen ist, welche bei eingebautem Einsatz (60) in die Aufnahmeöffnung ragt, und dass die Ausformung (64) zumindest im Bereich der Durchgangsöffnung (62) geteilt ausgebildet ist und zwei getrennt voneinander ausgebildeten Abschnitte derart aufweist, dass die Abschnitte vor dem Einbau des Einsatzes (60) in die Aufnahmeöffnung soweit voneinander wegzubewegen sind, dass die Durchgangsöffnung (62) für das Einlegen des Kabels bzw. des Seilzuges bzw. der Leitung ausreichend weit geöffnet ist, und dass die Abschnitte nach dem Einbau des Einsatzes (60) in die Aufnahmeöffnung zumindest bereichsweise derart aneinander anliegen, dass die Durchgangsöffnung (62) soweit geschlossen ist, dass das Kabel bzw. des Seilzuges bzw. die Leitung zumindest abschnittsweise gegen Herausziehen gesichert ist.

6. Einsatz nach Anspruch 5, **dadurch gekennzeichnet, dass** der Einsatz (60) zweiteilig ausgebildet ist, und dass die Teilungsebene (T) durch die Durchgangsöffnung (62) und die gegebenenfalls vorgesehene Ausformung (64) verläuft.

7. Einsatz nach einem der Ansprüche 5 oder 6, **dadurch gekennzeichnet, dass** an jedem Abschnitt der Ausformung (64) ein Verbindungselement (70a, 70b) ausgebildet ist, wobei die beiden Verbindungselemente (70a, 70b) miteinander in Eingriff stehen, wenn der zweiteilige Einsatz (60) als Einheit zusammengesetzt ist.

8. Einsatz nach einem der vorhergehenden Ansprüche 1 bis 7, **dadurch gekennzeichnet, dass** an dem Einsatz (60) eine Befestigungsöffnung (84) vorgesehen ist, durch die das Befestigungselement, mit dem der Einsatz (60) am Fahrradrahmen lösbar zu befestigen ist, geführt ist.

9. Einsatz nach Anspruch 8, **dadurch gekennzeichnet, dass** die Befestigungsöffnung (84) an der dem Widerlager (66) entgegengesetzten Seite am Einsatz (60) ausgebildet ist.

10. Einsatz nach Anspruch 6 oder 7 und nach Anspruch 8 oder 10, **dadurch gekennzeichnet, dass** an jedem Einsatzteil (60a, 60b) des geteilten Einsatzes (60) jeweils eine Öse (80a, 80b) mit einer Öffnung (82a, 82b) ausgebildet ist, und dass die beiden Ösen (80a, 80b) derart aufeinander zu liegen kommen, wenn die Einsatzhälften (60a, 60b) des zweiteiligen Einsatzes (60) als Einheit zusammengesetzt sind, dass die Öffnungen (82a, 82b) miteinander fluchten und die Befestigungsöffnung (84) bilden.

11. Einsatz nach einem der vorhergehenden Ansprüche, **dadurch gekennzeichnet, dass** die Aufnahmeöffnung (38) in einem am Fahrradrahmen (36) befestigten Rahmenelement (40) ausgebildet ist.

## Claims

1. An insert (10; 60) to be removably mounted in a receiving opening (38) in a bicycle frame (36) for securing cables, pulls, or lines (46) fed through the receiving opening (38), the insert (10; 60) comprising a pass-through opening (18; 62) for the cable, pull, or line (46),
**characterized in that**,
the insert (10; 60) comprises at least one thrust bearing (24; 66) for inserting in the receiving opening (38) by means of which the insert (10; 60) is supported in segments on the inner side of the bicycle frame (36) in the region of the receiving opening (38) in a state of having been placed in the receiving opening (38), and that the insert (10; 60) can be removably fastened to the bicycle frame (36) by means of at least one fastening element (30) disposed apart from the thrust block (24; 66) such that the insert (10; 60) in a state of having been placed in the receiving opening (38) makes sealing contact under tension with the bicycle frame (36) at least in segments by the interaction of the fastening element (30) and the thrust block (24; 66) in the edge region (34) transitioning into the peripheral contour (32) of the insert (10; 60) at the underside thereof to be faced toward the bicycle frame (36), wherein the insert (60) is split at least in the region of the pass-through opening (62), such that prior to installation of the insert (60) in the bicycle frame, the pass-through opening (62) can be opened along the entire axial length thereof for inserting the cable or pull or line into the pass-through opening (62) and that the pass-through opening (62) is closed when the insert (60) is installed so that the cable or the line is secured at least in segments against pulling out.

2. The insert according to claim 1, **characterized in that** a molding (16; 64) protruding into the receiving opening (38) is implemented on the insert (10; 60), in which the pass-through opening (18; 62) for the cable or pull or line (46) is provided.

3. The insert according to claim 2, **characterized in that** the thrust block is a protrusion (24) formed on the molding (16) by means of which the insert (10; 60) makes contact with the inner side of the bicycle frame (36), while the molding (16; 64) transitions into the flatter edge region (34) of the insert (10; 60).

4. The insert according to any one of the claims 2 through 3, **characterized in that** the molding (16) serves as a support surface for the end of a cable or pull sheath.

5. The insert according to any one of the claims 1 through 4, **characterized in that** the pass-through opening (62) is provided in a molding (64) formed on the insert (60) and protruding into the receiving opening when the insert (60) is installed, and that the molding (64) is split at least in the region of the pass-through opening (62) and comprises two separately implemented segments such that the segments can be moved so far apart from each other prior to installing the insert (60) into the receiving opening that the pass-through opening (62) is opened sufficiently wide for inserting the cable or pull or line, and that the segments contact each other at least in some regions after installation of the insert (60) in the receiving opening , such that the pass-through opening (62) is closed so far that the cable or the pull or the line is secured at least in segments against pulling out.

6. The insert according to claim 5, **characterized in that** the insert (60) is implemented as two parts and that the parting plane (T) runs through the pass-through opening (62) and any provided molding (64).

7. The insert according to any one of the claims 5 or 6, **characterized in that** a connecting element (70a, 70b) is provided on every segment of the molding (64), wherein the two connecting elements (70a, 70b) are engaged with each other when the two-part insert (60) is assembled as a unit.

8. The insert according to any one of the preceding claims 1 through 7, **characterized in that** a fastening opening (84) is provided on the insert (60) through which the fastening element by means of which the insert (60) can be removably fastened to the bicycle frame is guided.

9. The insert according to claim 8, **characterized in that** the fastening opening (84) is implemented on the insert (60) on the side opposite the thrust block (66).

10. The insert according to claim 6 or 7 and according to claim 8 or 10, **characterized in that** one eye (80a, 80b) having an opening (82a, 82b) is implemented on each insert part (60a, 60b) of the split insert (60) and has an opening (82a, 82b), and that the two eyes (80a, 80b) make contact with each other such that, when the insert halves (60a, 60b) of the two-part insert (60) are assembled as a unit, the openings (82a, 82b) are flush with each other and form the fastening opening (84).

11. The insert according to any one of the preceding claims, **characterized in that** the receiving opening (38) is implemented in a frame element (40) attached to a bicycle frame (36).

## Revendications

1. Insert (10; 60) à fixer de manière amovible dans une ouverture de réception (38) prévue dans un cadre de bicyclette (36) pour la fixation de câbles, de câbles de commande ou de conduits (46) passés dans l'ouverture de réception (38), dans lequel l'insert (10; 60) présente une ouverture de passage (18; 62) pour le câble, le câble de commande ou le conduit (46),
**caractérisé**
**en ce que** l'insert (10; 60) comporte au moins une butée (24; 66) à introduire dans l'ouverture de réception (38), par laquelle, dans un état de mise en place dans l'ouverture de réception (38), l'insert (10; 60) s'appuie au moins en partie sur la face intérieure du cadre de bicyclette (36) au niveau de l'ouverture de réception (38), et en ce que l'insert (10; 60) est fixable de manière amovible sur le cadre de bicyclette (36) par au moins un élément de fixation (30) distant de la butée (24; 66), de telle manière qu'en état de fixation dans l'ouverture de réception (38) du cadre de bicyclette, l'insert (10; 60) est au moins en partie en contact étanche sous précontrainte avec le cadre de bicyclette (36), du fait de la coopération de l'élément de fixation (30) avec la butée (24; 66) dans la zone de bord (34) de transition vers le contour périphérique (32) de la face inférieure de l'insert (10; 60) à opposer au cadre de bicyclette (36), dans lequel l'insert (60) est prévu divisé au moins dans la zone de l'ouverture de passage (62), de sorte qu'avant montage de l'insert (60) dans le cadre de bicyclette, l'ouverture de passage (62) pour l'insertion du câble, du câble de commande ou du conduit dans l'ouverture de passage (62) doit être ouverte sur toute sa longueur axiale, et que lorsque l'insert (60) est monté, l'ouverture de passage (62) est fermée jusqu'à ce que le câble ou le conduit soit au moins partiellement bloqué pour empêcher son retrait.

2. Insert selon la revendication 1, **caractérisé en ce qu'**un relief (16; 64) en saillie dans l'ouverture de réception (38) est formé sur l'insert (10; 60), dans lequel est prévue l'ouverture de passage (18; 62) pour le câble, le câble de commande ou le conduit (46).

3. Insert selon la revendication 2, **caractérisé en ce que** la butée est une saillie (24) formée sur le relief (16), par laquelle l'insert (10; 60) monté est en contact de surface avec la face intérieure du cadre de bicyclette (36), à la transition du relief (16; 64) vers la zone de bord (34) plane de l'insert (10; 60).

4. Insert selon la revendication 2 ou 3, **caractérisé en ce que** le relief (16) sert de surface d'appui pour l'extrémité d'une gaine de câble ou de câble de commande.

5. Insert selon l'une des revendications 1 à 4, **caractérisé en ce que** l'ouverture de passage (62) est prévue dans un relief (64) formé sur l'insert (60) et faisant saillie dans l'ouverture de réception quand l'insert (60) est monté, et **en ce que** le relief (64) est prévu divisé au moins dans la zone de l'ouverture de passage (62) et comprend deux parties séparées l'une de l'autre, de telle manière que lesdites parties sont à éloigner l'une de l'autre avant le montage de l'insert (60) dans l'ouverture de réception jusqu'à ce que l'ouverture de passage (62) soit suffisamment ouverte pour l'introduction du câble, du câble de commande ou du conduit, et que les parties sont adjacentes au moins en partie après le montage de l'insert (60) dans l'ouverture de réception, si bien que l'ouverture de passage (62) est fermée jusqu'à ce que le câble, le câble de commande ou le conduit soit au moins partiellement bloqué pour empêcher son retrait.

6. Insert selon la revendication 5, **caractérisé en ce que** l'insert (60) est prévu en deux parties, et que le plan de division (T) passe par l'ouverture de passage (62) et le relief (64) éventuellement prévu.

7. Insert selon la revendication 5 ou 6, **caractérisé en ce qu'**un élément de connexion (70a, 70b) est formé sur chaque partie du relief (64), dans lequel les deux éléments de connexion (70a, 70b) sont en prise l'un avec l'autre quand l'insert (60) en deux parties est assemblé comme unité.

8. Insert selon l'une des revendications 1 à 7, **caractérisé en ce qu'**une ouverture de fixation (84) est prévue sur l'insert (60), à travers lequel est passé l'élément de fixation au moyen duquel l'insert (60) est à fixer de manière amovible sur le cadre de bicyclette.

9. Insert selon la revendication 8, **caractérisé en ce que** l'ouverture de fixation (84) est formée sur le côté de l'insert (60) opposé à la butée (66).

10. Insert selon la revendication 6 ou 7 et selon la revendication 8 ou 10, **caractérisé en ce qu'**un oeillet (80a, 80b) est formé avec une ouverture (82a, 82b) sur chaque partie d'insert (60a, 60b) de l'insert (60) divisé, et **en ce que** les deux oeillets (80a, 80b) sont superposables de telle manière que les ouvertures (82a, 82b) sont alignées et forment l'ouverture de fixation (84) lorsque les moitiés (60a, 60b) de l'insert (60) en deux parties sont assemblées comme unité.

11. Insert selon l'une des revendications précédentes, **caractérisé en ce que** l'ouverture de réception (38) est formée dans un élément de cadre (40) fixé sur le cadre de bicyclette (36).
